# EUROPEAN PATENT SPECIFICATION

(11) **EP 3 705 217 B1**
(45) Date of publication and mention of the grant of the patent: **26.10.2022**
(21) Application number: 20157578.4
(22) Date of filing: 17.02.2020
(51) Int. Cl.: B23B 31/00, B30B 9/32

(54) **MACHINE FOR PROCESSING SCRAP**
MASCHINE ZUR VERARBEITUNG VON AUSSCHUSS
MACHINE DE TRAITEMENT DE DÉCHETS

(30) Priority: 05.03.2019 IT 201900003175
(43) Date of publication of application: 09.09.2020
(73) Proprietor: Bonfiglioli, Giancarlo, 40050 Castello d'Argile (BO) (IT)
(72) Inventor: Bonfiglioli, Giancarlo, 40050 Castello d'Argile (BO) (IT)
(74) Representative: Corradini, Corrado

(56) References cited:
- EP-A1- 2 743 070
- DE-A1- 3 904 204
- DE-C- 912 167
- GB-A- 2 202 774
- JP-A- H10 193 187
- JP-B2- 2 937 920
- US-A- 3 367 019

## Description

### Field of the art

The present invention regards a machine for processing scrap, such as for example carcasses of vehicle bodies or parts thereof or other similar products. In particular, the invention regards a machine for processing scrap configured for grinding said scrap with the aim of reducing the overall dimension thereof and make them displaceable by means of shovels, buckets and similar tools. An example of such a machine, corresponding to the preamble of claim 1, is disclosed by EP 2 743 070 A,

### State of the art

Known are machines for processing scrap, such as for example motor vehicles, parts thereof, industrial machinery or large household appliances, which generally provide for compacting the scrap and subsequently cutting the compacted scrap into pieces to reduce the overall dimension thereof and make it easier to move.

A known embodiment of such machines comprises a container body which defines a volume for receiving the scrap and housed in which is a press suitable to compact, in at least one portion of the reception volume, said scrap. The machine then comprises a shear suitable to cut the compacted scrap and a conveyor, for example a conveyor belt, or a pusher element which moves the compacted scrap from the portion of the reception volume. Some of these machines also require a conveyor or a pusher element for supplying the press after introducing the scrap, for example by means of a crane with a claw, in the volume for receiving the scrap.

A problem of such machinery thus lies in the need for a device that pushes the scrap into the housing volume, towards the press and/or towards the shear. As is, such device requires an accurate designing, requires maintenance and requires power supply.

A known solution to such problem is disclosed in DE912167, which discloses a machine for processing scrap which has an inlet opening realized in an upper portion, a press positioned at a lower height with respect to the inlet opening, and a shear positioned at a lower height with respect to the press.

Based on the kind of scrap, it could be necessary or not to carry the scarp processed by the press and the shear to a mill near the machine for further processing.

An object of the present invention is to improve the prior art machines through a solution that is simple, rational and inexpensive.

Such objects are attained by the characteristics of the invention, which are outlined in the independent claim. The dependent claims outline preferred and/or particularly advantageous aspects of the invention.

### Description of the invention

The invention provides a machine for processing scrap having the features of claim 1.

Thanks to such solution, means for moving the scrap towards the press and/or towards the shear are not needed, in that the arrangement of the elements one beneath the other allows to auto-supply them exploiting the force of gravity, thus reducing the required components of the machine and thus reducing the probability of malfunction and the cost thereof.

Preferably, the reception volume may extend along a mainly vertical direction.

In this manner, the displacement of the scrap by means of gravity is facilitated further.

According to another optional aspect of the invention, the inlet opening can lie on a horizontal plane.

This allows facilitating the operations for loading the machine for processing scrap from above, for example by means of a crane with a claw.

According to yet another optional aspect of the invention, the press can comprise a clamp rotatably associated to the container body according to a horizontal hinge axis.

Another optional aspect of the invention provides for that the machine for processing scrap can comprise a further press, at least partially housed in the reception volume and arranged at an intermediate height between the press and the shear.

This allows optimising the work of cutting the scrap carried out by the shear.

A yet further aspect of the invention provides for that the container body comprises an outlet opening and the machine comprises a pusher element for pushing the scrap cut by the shear towards said outlet opening.

Thanks to such solution it is possible to prevent malfunctions of the machine arising from accumulation of scrap downstream of the shear.

A further aspect of the invention provides for that the machine comprises a mill for scrap suitable to grind the scrap cut by the shear, the mill comprising an inlet mouth and a duct that connects the outlet opening of the container body to the inlet mouth of the mill.

In this manner, the cut scrap can directly reach the mill, without having to convey them, for example by means of bulldozers, trucks, cranes.

Furthermore, the machine for processing scrap comprises a discharge opening, in communication with a duct, and a diverter body, the diverter body being moveable between a first position, in which it occludes the discharge opening and it allows the movement of the of the cut scrap from the outlet opening of the container body to the inlet mouth of the mill, and a second position, in which it clears the discharge opening and diverts the scrap exiting from the outlet opening of the container body towards the discharge opening.

Thanks to such solution, it is possible to process both painted scrap that should be processed in the mill too, and unpainted scrap, which does not have to be processed in the mill and thus must be discharged before reaching it.

Preferably, the duct can be positioned at a height equal to the height of the outlet opening of the container body at most.

This allows facilitating the supply of the duct, without requiring means for conveying the scrap.

### BRIEF DESCRIPTION OF THE DRAWINGS

Further characteristics and advantages of the invention will be apparent from reading the following description - provided by way of non-limiting example - with reference to the figures illustrated in the attached drawings.

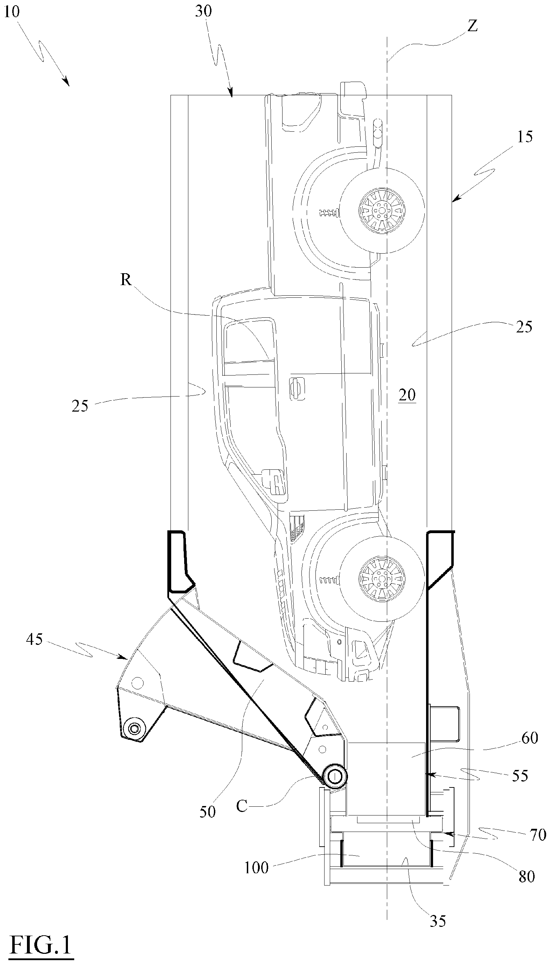

Figure 1 is a schematic and sectional lateral view of a machine for processing scrap, in which a press of said machine is positioned in a first operative position.

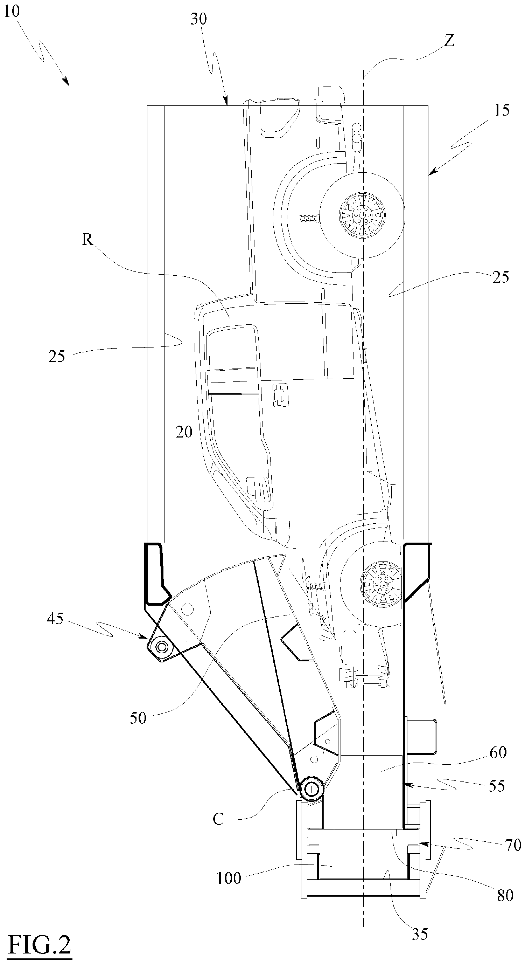

Figure 2 is a schematic and sectional lateral view of the machine for processing scrap of figure 1, in which the press is positioned in a second operative position.
Figure 3 is a schematic and sectional front view of the machine for processing scrap in figure 1 and 2, wherein a diverter body is positioned in a first operative position.
Figure 4 is a schematic and sectional front view of the machine for processing scrap of figure 3, wherein the diverter body is positioned in a second operative position.
Figure 5 is a schematic and sectional plan view of the machine for processing scrap of the previous figures.

### BEST EMBODIMENT OF THE INVENTION

With particular reference to such figures, a machine for pressing and cutting scrap R is indicated in its entirety with 10.

The machine 10 comprises a container body 15 which defines a volume 20 for receiving the scrap R. For example, the container body 15 comprises a tubular portion that defines (at least partially) the volume 20 for receiving the scrap R.

The reception volume 20 extends along a mainly vertical direction, i.e. it mainly extends along a vertical axis Z.

In the illustrated embodiment, the container body 15, or the tubular portion, comprises a plurality of inner lateral walls 25 which laterally delimit (with respect to a horizontal direction) the reception volume, the inner walls being vertical, for example they are flat and lie (at least partially) on respective vertical planes.

For example, the container body comprises four inner lateral walls 25, juxtaposed two by two.

The container body 15 comprises an inlet opening 30 for the access of the scrap R into the reception volume 20, the inlet opening 30 being obtained in an upper portion, or - in other words - in a top portion, of the container body 15.

The inlet opening 30 delimits - at the top part - the tubular portion of the container body 15.

For example, the inlet opening 30 lies on a plane transversal to a vertical axis, or it lies on a plane transversal to the vertical axis Z. Preferably, the inlet opening 30 lies on a horizontal plane.

The container body 15, comprises a bottom wall 35 obtained in a lower portion of the container body and which delimits the reception volume 20. I.e., the bottom wall closes - at the lower part - the tubular portion of the container body 15.

The bottom wall 35 is suitable to support - at the lower part - the scrap R present in the reception volume 20.

The bottom wall 35 is opposite to the inlet opening 30, the inlet opening 30 being at least partially superimposed - in plan view - with respect to said bottom wall 35, preferably the inlet opening 30 is fully superimposed - in plan view - with respect to the bottom wall 35. The bottom wall 35 lies on a substantially horizontal plane.

The container body comprises an outlet opening 40 (for processed scrap R), which is obtained in an inner lateral wall of the container body.

The outlet opening 40 is delimited - at the lower part - by the bottom wall 35.

The container body 15 comprises: a first section which extends from the inlet opening 30 towards the bottom wall 35, in which the horizontal cross-section of the reception volume 20 is constant along a vertical axis, a second section immediately subsequent to the first section, in which there is a narrowing of the container body 15 and the horizontal cross-section of the reception volume reduces going towards the bottom wall 35, and a third section immediately subsequent to the second section and in which the horizontal cross-section of the reception volume 20 is constant along a vertical axis .

The outlet opening 40 is positioned, for example entirely, in the third section.

In the illustrated embodiment, the four inner lateral walls 25, in the first section and in the third section, lie on vertical planes.

It cannot be ruled out that, in an alternative embodiment of the container body - not illustrated - the inner lateral walls can be inclined, for example by about 10° with respect to the vertical axis Z in the direction of mutual approaching going from the inlet opening 30 to the bottom wall, substantially to form a hopper.

The machine 10 comprises a press 45, configured to compress the scrap R, which is at least partially received in the reception volume 20 and it is positioned, preferably entirely, at a lower height with respect to the inlet opening 30.

The press 45 is positioned beneath - in plan view - the inlet opening 30, for example they are at least partially aligned vertically.

It should be observed that in this document, reference to the height of an element is used to indicate the height of such element with respect to a surface on which the machine 10 for processing scrap R lies.

The press 45 is positioned in the second section.

The press 45 comprises an abutment body suitable to contact the scrap R and an actuation unit configured to displace the abutment body along a transversal direction with respect to a longitudinal axis of the reception volume 20, in a direction of approaching and moving away with respect to an inner wall of the plurality of inner walls of the container body, opposite to the abutment body.

For example, the actuation unit is configured to displace the abutment body along a transversal direction with respect to an axis perpendicular to a laying plane of the inlet opening, i.e. transversal with respect to the axis Z.

The abutment body is housed, for example entirely, in the second section of the container body, i.e. it is housed in the narrowing of the reception volume.

In the embodiment illustrated in the figures, the abutment body comprises a clamp 50, which is hinged to the container body 15, i.e. to an inner lateral wall 25 of the container body 15, with respect to a horizontal hinge axis C. Such clamp 50 is moveable by means of the actuation unit between an inoperative position, in which the distance of the clamp is minimum with respect to the inner lateral wall 25 to which the clamp hinges and the distance is maximum with respect to an inner lateral wall opposite to the inner lateral wall 25 to which it is hinged, and an inoperative position, in which the distance of the clamp is maximum with respect to the inner lateral wall 25 to which the clamp hinges and the distance is minimum with respect to an inner lateral wall 25 opposite to the inner lateral wall to which it is hinged.

In the first position the clamp 50 is received in an opening obtained in a portion of the inner lateral wall 25 to which it is hinged.

The actuation unit may comprise a pair of linear actuators (not illustrated) suitable to act, directly or indirectly, on the clamp, for example each provided with a first element hinged at one end to the container body and a second element, slidable with respect to the first element and hinged to the clamp at a distal end of the first element.

The machine 10 comprises a further press 55, at least partially housed in the reception volume 20, for example in the third section, which is configured to compress the scrap R compressed by the press 45.

The further press 55 is positioned, for example entirely, at a lower height with respect to the press 45.

The further press 55 is positioned beneath - in plan view - the press 45, for example beneath the inlet opening 30 too.

Preferably, the further press and the inlet opening are at least partially aligned vertically. Such further press, for example known as sheet pressing machine, comprises an abutment body suitable to contact the scrap R pressed by the press 45 and an actuation unit configured for displacing the abutment body along a transversal direction with respect to a longitudinal axis of the reception volume 20 and with respect to the displacement direction of the abutment body of the press 45, in the direction of approaching and moving away with respect to an inner lateral wall of the plurality of inner walls of the container body, opposite to the abutment body of the further press 55.

For example, the actuation unit of the further press 55 is configured for displacing the abutment body of the further press 55 along a transversal direction with respect to the axis Z, i.e. transversal with respect to an axis perpendicular to a laying plane of the inlet opening.

The abutment body of the further press 55 is housed, for example entirely, in the third section of the container body 15, for example entirely at a lower height with respect to the press 45.

In the embodiment illustrated in the figures, the abutment body comprises a plunger 60 slidable with respect to the container body 15 along a substantially horizontal sliding axis S and a linear actuator 65 configured to actuate the plunger 60 along the sliding axis S between a first position, in which the distance between the plunger and an inner lateral wall of the container body is maximum, and a second position, in which such distance is minimum and the plunger presses the sheets pressed between it and said inner lateral wall of the container body 15.

For example, such sliding axis S is parallel and eccentric with respect to the hinge axis C.

The machine 10 comprises a shear 70 for cutting the pressed scrap R, which is at least partially housed in the reception volume 20, for example in the third section, and it is positioned at a lower height with respect to the height of the press 45 and of the further press 55.

In particular, the shear 70 is arranged at a height comprised between the height of the press 45, for example of the further press 55, and the height of the bottom wall 35.

The shear 70 is positioned beneath - in plan view - the further press 55, for example beneath the press 45 and the inlet opening 30 too.

Preferably, the shear 70 and the inlet opening 30 are at least partially aligned vertically. The shear 70 comprises a movable element 75 provided with a blade 80, a fixed element 85 provided with a blade 90, and a further linear actuator 95 suitable to actuate the movable element 75 in the direction of approaching and moving away from the fixed element 85 along a sliding axis T.

The fixed element 85 is arranged at an upper portion of the outlet opening 40 of the container body 15, i.e. the blade 90 of the fixed element 85 limits the outlet opening 40 at the top part.

The machine 10 comprises a pusher element configured for pushing the cut scrap R outside the reception volume 20, pushing it, for example through the outlet opening 40.

The pusher element comprises an abutment surface 100 moveable along a thrust axis, for example parallel to the bottom wall 35 and transversal to the outlet mouth, between a first position in which the abutment surface 100 is inside the reception volume, and a second position, in which the abutment surface projects externally from the reception volume through the outlet opening 40.

In the illustrated embodiment, the pusher element is slidably integrally joined to the movable element 75 of the shear, i.e. the abutment surface 100 is obtained in the movable element 75 of the shear and it is positioned beneath the blade 80 of the movable element. Thus, the thrust axis of the pusher element coincides with the sliding axis T of the movable element 75.

The abutment surface 100 lies on a transversal plane, for example perpendicular to the bottom wall 35.

Furthermore, the abutment surface 100 can lie on a plane parallel to a laying plane of the outlet opening.

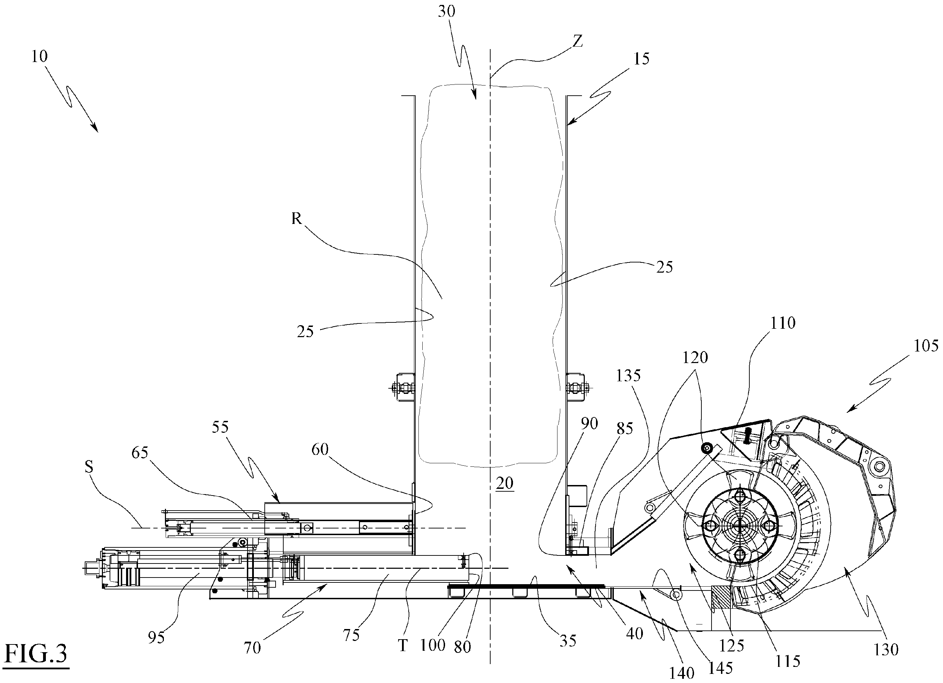

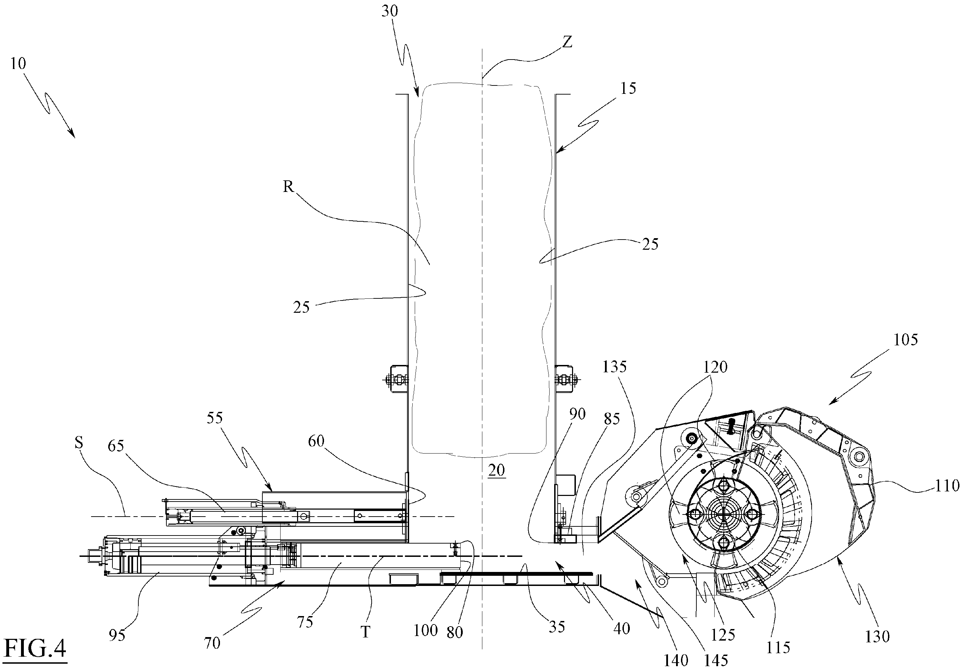

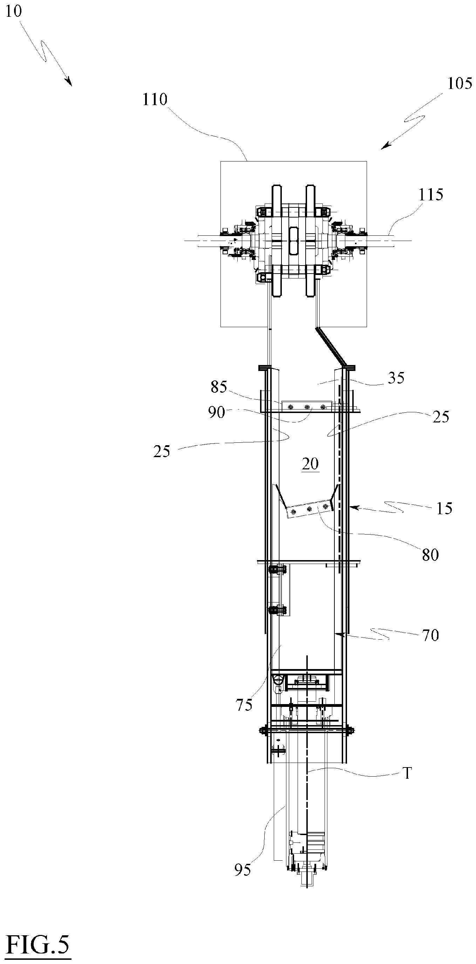

With particular reference to figures 3 to 5, the machine 10 comprises a mill 105 for scrap R, configured to grind the scrap R cut by the shear 70.

Such mill 105 comprises a casing 110 rotatably housed in which is a shaft 115 provided with flanges integrally joined in rotation therewith and hinged to which are respective hammers 120 for grinding the scrap R cut by the shear 70.

The shaft 115 is rotatably housed in the casing 110 according to a horizontal rotation axis. The mill 105 comprises an inlet mouth 125 and an outlet mouth 130 obtained in the casing 110, and a duct 135 that connects the outlet opening of the container body 15 with the inlet mouth of the mill 105.

The duct 135 is arranged at a height equal to the height of the outlet opening 40 at most. For example, the duct 135 comprises a lower wall arranged substantially at the same height as the bottom wall 35. Preferably, the lower wall is coplanar to the bottom wall 35.

The duct 135 has a horizontal substantially longitudinal axis.

The machine 10 comprises a discharge opening 140, having a section on a non-zero horizontal plane, which can be obtained in one from among the duct 135 and the casing 110.

It should be observed that the discharge opening 140 is different from the outlet mouth 130 of the mill 105.

In the illustrated embodiment, the discharge opening 140 is obtained in the casing, for example in a lower portion thereof, downstream of the inlet mouth, with respect to the flow of the scrap R towards the mill 105.

The machine comprises a diverter body comprising a partitioning 145 hinged to the casing 110, preferably according to a substantially horizontal hinge axis.

The partitioning is hinged downstream of the discharge opening with respect to the flow of the scrap R from the outlet opening 40.

The diverter body, i.e. the partitioning 145, is movable between a first position, in which it occludes the discharge opening 140 and allows, or it does not obstruct, the movement of the cut scrap R from the outlet opening 40 of the container body 15 to the inlet mouth 125 of the mill 105, and a second position, in which it clears the discharge opening 140 and diverts the movement of the scrap R exiting from the outlet mouth towards the discharge opening 140.

In particular, in the first position the diverter body occludes, for example fully, the discharge opening 140.

Furthermore, in the first position the partitioning 145 lies on a substantially horizontal plane.

In the second position, the partitioning 145 lies on an oblique plane.

The machine comprises an actuation of the diverter body, which is controlled by a control unit configured so as to receive a remote signal for switching the diverter body between the first and the second position.

The machine 10 according to the invention operates as follows.

The scrap R is introduced - by means of a crane with a claw or other means - into the reception volume 20 dropping them through the inlet opening 30. From there, the scrap R drops by gravity at least up to the second section present in which is the narrowing of the reception volume and present in which is the press 45, which carries out a first compaction of the scrap R.

When the press 45 switches from the operative position to the inoperative position, the scrap R drops by gravity towards the further press 55, which presses the pressed scrap R compacting it further and maintaining it in position while the shear is actuated to carry out the cutting of the compacted scrap R.

Thanks to the presence of the abutment surface 100 on the movable element 75 of the shear 70, at each actuation of the shear 70, the scrap R previously cut and resting against the bottom wall is pushed towards the duct of the mill 105.

When processing painted scrap R, an operator - by means of remote control - switches the diverter body present in the duct 135 to the first position, so that the cut scrap R is pushed into the mill 105.

On the contrary, when processing non-painted scrap R, acting on the remote control the operator switches the diverter body to the second position, so as to directly discharge the cut scrap R through the discharge opening, without it reaching the mill.

Basically, the materials used as well as the shapes and contingent dimensions, may vary according to the needs without departing from the scope of protection of the claims that follow.

## Claims

1. Machine (10) for processing scrap (R) comprising:
- a container body (15) which defines a volume for receiving the scrap (R) and which comprises an opening (30) for the inlet of the scrap (R), provided in the container body (15), for access to the reception volume (20), and an outlet opening (40),
- a press (45) suitable to press the scrap (R) and at least partially housed in the reception volume (20),
- a shear (70) for cutting the scrap (R) at least partially housed in the reception volume (20), and
- a pusher element (100) for pushing the scrap (R) cut by the shear (70) towards said outlet opening (40),
wherein the inlet mouth (125) is obtained in an upper portion of the container body (15), the press (45) is positioned at a lower height with respect to the inlet opening (30) and the shear (70) is positioned at a lower height with respect to the press (45),
wherein the machine also comprises a mill (105) for scrap (R) suitable to grind the scrap (R) cut by the shear (70) and comprising an inlet mouth (125) and a duct (135) connecting the outlet opening (40) of the container body to the inlet mouth (125) of the mill (105),
said machine being **characterised in that** it comprises a discharge opening (140), in communication with the duct (135), and a diverter body (145), the diverter body (145) being moveable between a first position, in which it occludes the discharge opening (140) and allows the cut scrap (R) to move from the outlet opening (40) of the container body to the inlet mouth (125) of the mill (105), and a second position, in which it clears the discharge opening (140) and diverts the scrap (R) exiting from the outlet opening (40) of the container body (15) towards the discharge opening (140).

2. Machine (10) for processing scrap (R) according to claim 1, wherein the reception volume (20) extends along a mainly vertical direction.

3. Machine (10) for processing scrap (R) according to claim 1, wherein the inlet opening (30) lies on a horizontal plane.

4. Machine (10) for processing scrap (R) according to claim 1, wherein the press (45) comprises a clamp (50) rotatably associated to the container body (15) according to a horizontal hinge axis.

5. Machine (10) for processing scrap (R) according to claim 1, comprising a further press (55), at least partially housed in the reception volume (20) and arranged at an intermediate height between the press (45) and the shear (70).

6. Machine (10) for processing scrap (R) according to claim 5, wherein the press (45), the further press (55) and the shear are at least partially aligned vertically to the inlet opening (30).

7. Machine (10) for processing scrap (R) according to claim 6, wherein the further press (55) is positioned entirely at a lower height with respect to the press (45).

8. Machine (10) for processing scrap (R) according to claim 1, wherein the duct (135) is positioned at a maximum height equal to the height of the outlet opening (40) of the container body at most.

## Patentansprüche

1. Maschine (10) zum Verarbeiten von Schrott (R), umfassend:
- einen Behälterkörper (15), der ein Volumen zum Aufnehmen des Schrotts (R) definiert und der eine Öffnung (30) für den Einlass des Schrotts (R), die in dem Behälterkörper (15) vorgesehen ist, für den Zugang zum Aufnahmevolumen (20), und eine Auslassöffnung (40) aufweist,
- eine Presse (45), die geeignet ist, den Schrott (R) zu pressen, und mindestens teilweise in dem Aufnahmevolumen (20) untergebracht ist,
- eine Schere (70) zum Schneiden des Schrotts (R), die mindestens teilweise in dem Aufnahmevolumen (20) untergebracht ist, und
- ein Schieberelement (100) zum Schieben des Schrotts (R), der von der Schere (70) geschnitten wird, in Richtung der Auslassöffnung (40),
wobei die Einlassmündung (125) in einem oberen Abschnitt des Behälterkörpers (15) erhalten ist, die Presse (45) in Bezug auf die Einlassöffnung (30) auf einer niedrigeren Höhe positioniert ist und die Schere (70) in Bezug auf die Presse (45) auf einer niedrigeren Höhe positioniert ist,
wobei die Maschine auch eine Mühle (105) für Schrott (R), die geeignet ist, den Schrott (R) zu zerkleinern, der von der Schere (70) geschnitten wird, und eine Einlassmündung (125) und einen Kanal (135) aufweist, der die Auslassöffnung (40) des Behälterkörpers mit der Einlassmündung (125) der Mühle (105) verbindet, wobei die Maschine **dadurch gekennzeichnet ist, dass** sie eine Austrittsöffnung (140) in Verbindung mit dem Kanal (135) und einen Ablenkkörper (145) aufweist, wobei der Ablenkkörper (145) zwischen einer ersten Position, in der er die Austrittsöffnung (140) verschließt und dem zerkleinerten Schrott (R) ermöglicht, sich von der Auslassöffnung (40) des Behälterkörpers zu der Einlassmündung (125) der Mühle (105) zu bewegen, und einer zweite Position beweglich ist, in der er die Austrittsöffnung (140) freimacht und den Schrott (R), der aus der Auslassöffnung (40) des Behälterkörpers (15) austritt, in Richtung der Austrittsöffnung (140) umlenkt.

2. Maschine (10) zum Verarbeiten von Schrott (R) nach Anspruch 1, wobei sich das Aufnahmevolumen (20) entlang einer hauptsächlich vertikalen Richtung erstreckt.

3. Maschine (10) zum Verarbeiten von Schrott (R) nach Anspruch 1, wobei die Einlassöffnung (30) auf einer horizontalen Ebene liegt.

4. Maschine (10) zum Verarbeiten von Schrott (R) nach Anspruch 1, wobei die Presse (45) eine Klemme (50) aufweist, die drehbar mit dem Behälterkörper (15) gemäß einer horizontalen Scharnierachse verbunden ist.

5. Maschine (10) zum Verarbeiten von Schrott (R) nach Anspruch 1, umfassend eine weitere Presse (55), die mindestens teilweise in dem Aufnahmevolumen (20) untergebracht und auf einer mittleren Höhe zwischen der Presse (45) und der Schere (70) angeordnet ist.

6. Maschine (10) zum Verarbeiten von Schrott (R) nach Anspruch 5, wobei die Presse (45), die weitere Presse (55) und die Schere mindestens teilweise senkrecht zur Einlassöffnung (30) ausgerichtet sind.

7. Maschine (10) zum Verarbeiten von Schrott (R) nach Anspruch 6, wobei die weitere Presse (55) in Bezug auf die Presse (45) vollständig auf einer niedrigeren Höhe positioniert ist.

8. Maschine (10) zum Verarbeiten von Schrott (R) nach Anspruch 1, wobei der Kanal (135) auf einer maximalen Höhe positioniert ist, die höchstens gleich der Höhe der Auslassöffnung (40) des Behälterkörpers ist

## Revendications

1. Machine (10) destinée au traitement de la ferraille (R) comprenant:
- un corps de conteneur (15) définissant un volume permettant de recevoir la ferraille (R) et comprenant une ouverture (30) d'entrée de la ferraille (R), prévue dans le corps de conteneur (15), pour accéder au volume de réception (20), et une ouverture de sortie (40),
- un pressoir (45) approprié pour presser la ferraille (R) et logé au moins partiellement dans le volume de réception (20),
- une cisaille (70) pour couper la ferraille (R) logée au moins partiellement dans le volume de réception (20), et
- un élément éjecteur (100) pour éjecter la ferraille (R) découpée par la cisaille (70) vers ladite ouverture de sortie (40),
dans laquelle l'embouchure d'entrée (125) est obtenue dans une partie supérieure du corps de conteneur (15), le pressoir (45) étant disposé à une hauteur inférieure par rapport à l'ouverture d'entrée (30) et la cisaille (70) étant disposée à une hauteur inférieure par rapport au pressoir (45),
dans laquelle la machine comprend également un broyeur (105) de ferraille (R) adapté pour broyer la ferraille (R) coupée par la cisaille (70) et comprenant une embouchure d'entrée (125) et un conduit (135) reliant l'ouverture de sortie (40) du corps de conteneur à l'embouchure d'entrée (125) du broyeur (105),
ladite machine étant **caractérisée en ce qu'**elle comprend une ouverture de décharge (140), en communication avec le conduit (135), et un corps déflecteur (145), le corps déflecteur (145) étant mobile entre une première position, dans laquelle il obture l'ouverture de décharge (140) et permet à la ferraille coupée (R) de se déplacer de l'ouverture de sortie (40) du corps de conteneur vers l'embouchure d'entrée (125) du broyeur (105), et une deuxième position, dans laquelle il dégage l'ouverture de décharge (140) et dévie la ferraille (R) sortant de l'ouverture de sortie (40) du corps de conteneur (15) vers l'ouverture de décharge (140).

2. Machine (10) destinée au traitement de la ferraille (R) selon la revendication 1, dans laquelle le volume de réception (20) s'étend le long d'une direction principalement verticale.

3. Machine (10) destinée au traitement de la ferraille (R) selon la revendication 1, dans laquelle l'ouverture d'entrée (30) repose sur un plan horizontal.

4. Machine (10) destinée au traitement de la ferraille (R) selon la revendication 1, dans laquelle le pressoir (45) comprend une pince (50) associée de manière rotative au corps de conteneur (15) selon un axe d'articulation horizontal.

5. Machine (10) destinée au traitement de la ferraille (R) selon la revendication 1, comprenant un autre pressoir (55), au moins partiellement logé dans le volume de réception (20) et disposé à une hauteur intermédiaire entre le pressoir (45) et la cisaille (70).

6. Machine (10) destinée au traitement de la ferraille (R) selon la revendication 5, dans laquelle le pressoir (45), le pressoir supplémentaire (55) et la cisaille sont au moins partiellement alignés verticalement par rapport à l'ouverture d'entrée (30).

7. Machine (10) destinée au traitement de la ferraille (R) selon la revendication 6, dans laquelle le pressoir supplémentaire (55) est disposé entièrement à une hauteur inférieure par rapport au pressoir (45).

8. Machine (10) destinée au traitement de la ferraille (R) selon la revendication 1, dans laquelle le conduit (135) est positionné à une hauteur maximale égale à la hauteur de l'ouverture de sortie (40) du corps de conteneur au maximum.
